# EUROPÄISCHE PATENTSCHRIFT

(11) **EP 1 287 413 B1**
(45) Veröffentlichungstag und Bekanntmachung des Hinweises auf die Patenterteilung: **24.01.2007**
(21) Anmeldenummer: 01949249.5
(22) Anmeldetag: 08.06.2001
(51) Int. Cl.: G05F 1/573

(54) **STROMVERSORGUNG MIT VERLUSTARMER EINSCHALTSTROMBEGRENZUNG**
POWER SUPPLY WITH LOW LOSS MAKING CURRENT LIMITATION
DISPOSITIF D'ALIMENTATION EN COURANT AVEC LIMITATION DE COURANT A L'ENCLENCHEMENT AVEC FAIBLE DISSIPATION

(30) Priorität: 08.06.2000 DE 20010283 U
(43) Veröffentlichungstag der Anmeldung: 05.03.2003
(73) Patentinhaber: SIEMENS AKTIENGESELLSCHAFT, 80333 München (DE)
(72) Erfinder: RAMPOLD, Andreas, 09648 Mittweida (DE); WEISS, Jörg, 09224 Chemnitz (DE)
(86) Internationale Anmeldenummer: PCT/DE2001/002152
(87) Internationale Veröffentlichungsnummer: WO 2001/095049

(56) Entgegenhaltungen:
- WO-A-99/12240
- DE-A- 2 044 782
- DE-A- 2 526 478
- DE-A- 3 502 195
- DE-C- 3 932 399
- US-A- 3 796 943
- US-A- 4 837 653
- US-A- 5 041 777

## Beschreibung

Die Erfindung bezieht sich auf eine Stromversorgung mit einem Gleichrichter zur Gleichrichtung einer Eingangswechselspannung und mit einem Speicherkondensator, der über ein von einer Ansteuerschaltung gesteuertes Strombegrenzungselement von der gleichgerichteten Eingangsspannung aufladbar ist.

Bei derartigen Geräten müssen besondere Vorkehrungen getroffen werden, um die bei deren Einschaltung verursachten Netzbelastungen zu minimieren.

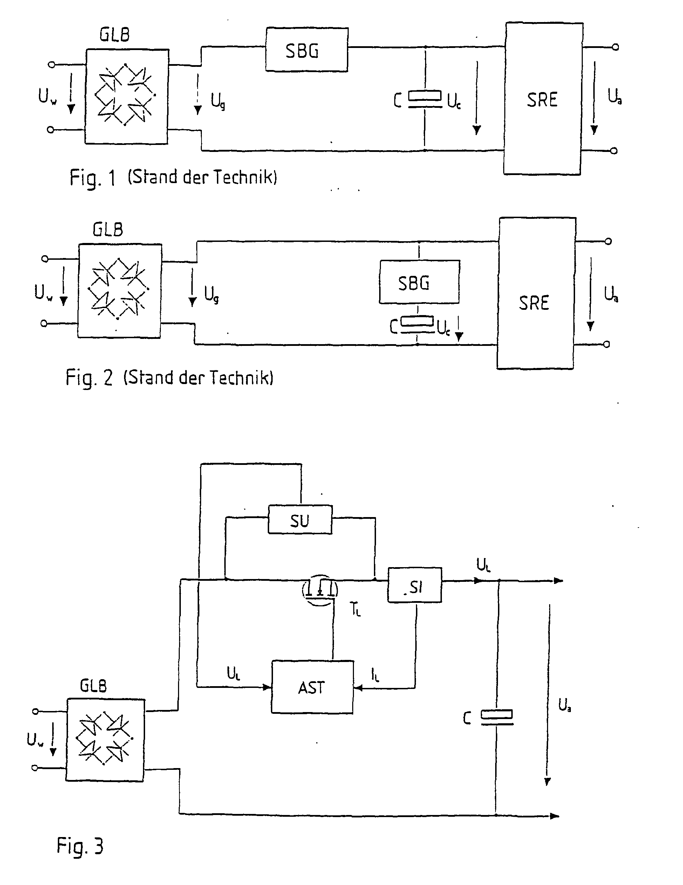

Hierzu ist in FIG 1 eine bekannte Stromversorgung mit einer Einschaltstrombegrenzung SBG und einem Spannungsregler SRE dargestellt. Eine Eingangswechselspannung U_{w} wird dabei nach Gleichrichtung in einem Gleichrichter GLB als pulsierende Gleichspannung U_{g} über eine Strombegrenzungsschaltung SBG einem Stützkondensator C zugeführt, an dem die Spannung U_{c} liegt und der parallel zu dem Eingang eines Spannungsreglers SRE oder einer anderen Last liegt. Mit Uₐ ist die Ausgangsspannung des Reglers SRE bezeichnet.

Der Stützkondensator C dient zur Überbrückung kurzzeitiger Ausfälle der Eingangsspannung U_{g}, die als Gleichspannung oder insbesondere als ungeglättete, am Ausgang eines Gleichrichters GLB erzeugte Spannung anliegt. Der Stützkondensator C weist in der Regel eine hohe Kapazität auf und er muss beim Einschalten der Stromversorgung zunächst aufgeladen werden, wobei die Strombegrenzungsschaltung SBG während dieses Ladevorgangs zu hohe Einschaltstromspitzenwerte verhindert.

Bekannte Stromversorgungen gehen z.B. aus DE 39 32 399, WO 99/12240, DE 25 26 478, DE 20 44 782, US 5 041 777 und US 4 837 653 hervor.

FIG 2 zeigt eine weitere bekannte Stromversorgung mit Einschaltstrombegrenzung, wobei hier der vom Regler SRE aufgenommene Laststrom zur Reduzierung der Verlustleistung nicht über die Strombegrenzung SBG fließt. Bezüglich dieser Anmeldung spielen die Unterschiede zwischen FIG 1 und FIG 2 jedoch keine Rolle.

Sobald der Kondensator C aufgeladen ist, muss die Strombegrenzung einen niedrigen Widerstand annehmen, damit durch die fließenden Ströme keine weiteren Verluste auftreten und im Bedarfsfall der Kondensator C seine Energie bei niedrigem Innenwiderstand an die Last abgeben kann. Eine derartige aktive Strombegrenzung wird z. B. mit Stromquellen charakteristisch ausgeführt.

Wird ein Kondensator über eine solche Strombegrenzung aufgeladen, so wird nahezu die gleiche Energie, die der Kondensator aufnimmt, in dem zur Strombegrenzung verwendeten Transistor in Wärme umgesetzt. Die Verlustleistung in dem Strombegrenzungselement ist bei konstant eingestelltem Begrenzungsstrom direkt proportional zur Spannungsdifferenz zwischen Eingangs- und Kondensatorspannung. Die Verlustleistung in dem Begrenzungselement schwankt daher innerhalb einer Halbwelle der Eingangsspannung U_{g} zwischen Null und einem Maximalwert. Die auftretende Verlustleistung ist besonders in Stromversorgungen kritisch, die im Normalbetrieb relativ viel Strom abgeben müssen, da verständlicherweise der Begrenzungsstrom höher als der maximale Betriebsstrom liegen muss. Aufgrund der kurzzeitigen Belastung des üblicherweise verwendeten Begrenzungstransistors musste dieser stark überdimensioniert werden, da die Bemessung auf Impulsverlustleistung im Spannungsmaximum im Zusammenhang mit transierter thermischer Impedanz erforderlich ist.

Eine Aufgabe der Erfindung liegt somit darin, eine Stromversorgung mit einer Strombegrenzungsschaltung anzugeben, welche die Verwendung von kostengünstigen Begrenzungselementen mit geringer zulässiger Verlustleistung ermöglicht.

Diese Aufgabe wird mit einer Stromversorgung gemäß Anspruch 1 gelöst.

Dank der Erfindung, welche nicht nur den Strom, sondern auch die Leistung berücksichtigt, können bei effizientem Schutz des Netzes und gegebenenfalls auch des Verbrauchers kostengünstige Begrenzungselemente Verwendung finden.

Dabei kann insbesondere vorgesehen sein, dass die Ansteuerschaltung dazu eingerichtet ist, bei Erreichen einer der maximalen Verlustleistung entsprechenden Grenzspannung den Strom über das Strombegrenzungselement abzuschalten.

Eine näherungsweise, jedoch in den meisten Fällen ausreichende Berücksichtigung der maximalen Verlustleistung ist erreichbar, falls die Ansteuerschaltung dazu eingerichtet ist, den Strom über das Begrenzungselement längs einer im wesentlichen unterhalb der Hyperbel der maximalen Verlustleistung im I/U-Kennlinienfeld verlaufenden Geraden abzuregeln.

Andererseits kann bei etwas höherem Schaltungsaufwand als bestmögliche Lösung auch vorgesehen sein, dass die Ansteuerschaltung dazu eingerichtet ist, über das Begrenzungselement den Strom im wesentlichen längs einer der maximalen Verlustleistung entsprechenden Hyperbel zu regeln.

Eine praktische Realisierung zeichnet sich dadurch aus, dass das Strombegrenzungselement ein in Serie mit einem Messwiderstand liegender Längstransistor ist, dessen Steuerelektrode einerseits über einen weiteren Transistor zur Realisierung einer Stromquelle und andererseits über ein durch Vergleich der Spannung an dem Längstransistor mit der Grenzspannung gewonnenes Komparatorsignal angesteuert ist.

Bei einer anderen praktischen Realisierung ist vorgesehen, dass das Strombegrenzungselement ein in Serie mit einem Messwiderstand liegender Längstransistor ist, der von einem Transistor angesteuert ist, dessen Eingangskreis einerseits dem Spannungsabfall an dem Messwiderstand proportionales und andererseits ein der Spannung an dem Längstransistor proportionales Signal zugeführt ist.

Bei der erfindungsgemäßen Realisierung ist vorgesehen, dass das Strombegrenzungselement ein in Serie mit einem Messwiderstand liegender Längstransistor ist, der von zwei Regelverstärkern angesteuert ist, wobei einem Regelverstärker einerseits ein der maximalen Verlustleistung entsprechender Referenzwert und andererseits der Ausgang eines Multiplizierers zugeführt ist, welcher den gemessenen Längsstrom mit der Spannung an dem Längstransistor multipliziert, und dem anderen Regelverstärker ein dem maximalen Strom entsprechender Referenzwert sowie der gemessene Längsstrom.

Die Erfindung samt weiterer Vorteile ist im folgenden unter Bezugnahme auf die beigefügten Zeichnungen näher erläutert. In diesen zeigen
- FIG 1 bzw. FIG 2: zwei Ausführungsformen bekannter Stromversorgungen, dem Stand der Technik entsprechend,
- FIG 3: eine allgemeine Ausführungsform einer erfindungsgemäßen Stromversorgung in einem Blockschaltbild,
- FIG 4: ein Schaltungsdetail einer ersten Ausführungsform der Erfindung,
- FIG 5: ein Schaltungsdetail einer zweiten Ausführungsform der Erfindung und
- FIG 6: ein Schaltungsdetail einer dritten Ausführungsform der Erfindung und
- FIG 7: in einem U/I-Diagramm mögliche Regel- bzw. Abschaltkennlinien von erfindungsgemäßen Strombegrenzungsschaltungen.

Bei der in FIG 3 gezeigten Schaltung nach der Erfindung wird gleichfalls aus einer Wechselspannung U_{w} mittels eines Gleichrichters GLB eine Gleichspannung U_{g} erzeugt. Diese Spannung U_{g} wird über ein Strombegrenzungselement, wie beispielsweise hier einen Feldeffekttransistor T_{L}, dem Stützkondensator C zugeführt.

Mit Hilfe eines Stromfühlers SI wird der Längsstrom i_{L} gemessen, und zur Messung der Spannung U_{L} an dem Transistor T_{L} dient ein Spannungsfühler SU. Die Signale aus Strom- und Spannungsfühler werden derart miteinander verknüpft und in ein Ansteuersignal für den Transistor T_{L} gewandelt, dass sich an letzterem eine der in FIG 7 dargestellten U-I-Kennlinien ergibt.

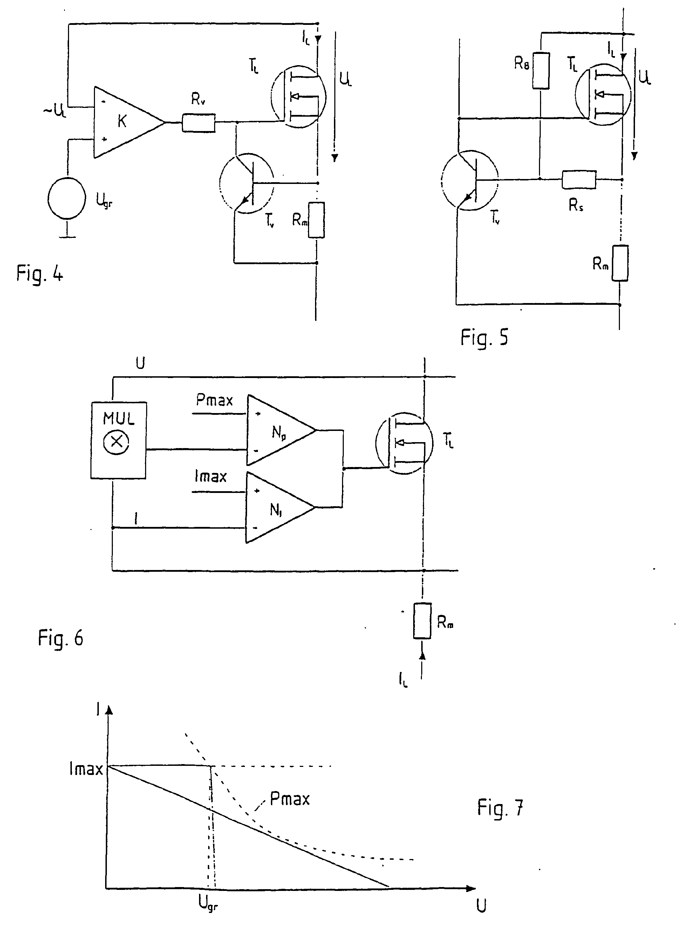

Aus FIG 4 geht eine Variante hervor, bei welcher ebenfalls ein Feldeffekttransistor T_{L} als Strombegrenzungselement dient. Als Stromfühler dient ein in Serie mit dem Transistor T_{L} liegender sehr niederohmiger Messwiderstand Rm, wobei die an diesem abfallende, dem Längsstrom i_{L} proportionale Spannung einen Transistor T_{V} über dessen Basis-Emitterstrecke steuert. Dieser wiederum steuert über seinen Kollektorkreis den Feldeffekttransistor T_{L} an. Andererseits erhält die Steuerelektrode des Feldeffekttransistors T_{L} auch - über einen Widerstand R_{V} - ein Abschaltsignal von dem Ausgang eines Komparators K, dessen einem Eingang die an dem Transistor T_{L} anliegende Spannung U_{L} und dessen anderen Eingang eine Grenzspannung U_{gr} als Referenzspannung zugeführt ist. Hierzu wird auch auf FIG 7 verwiesen, woraus klar wird, dass bei der Schaltung gemäß FIG 4 beim Einschalten zunächst eine Strombegrenzung entlang einer horizontalen Geraden auf I = Iₘₐₓ erfolgt und beim Erreichen der Grenzspannung U_{gr}, wobei Iₘₐₓ . U_{gr} = Pₘₐₓ, längs einer steil abfallenden Geraden de facto ein Abschalten erfolgt.

Bei der Ausführung der Erfindung nach FIG 5, bei welcher dort, wo sie FIG 4 entspricht, gleiche Bezugszeichen verwendet werden, wird die am Transistor T_{L} anliegende Spannung U_{L} über einen Widerstand R_{B} der Basis des Ansteuertransistors T_{V} als entsprechender Strom aufgeprägt, wobei zwischen der Basis von T_{V} und dem Verbindungspunkt des Transistors T_{L} mit dem Messwiderstand Rₘ noch ein weiterer Widerstand R_{S} liegt. Bei dieser Variante wird der Strom i_{L} längs einer Geraden (siehe FIG 7) begrenzt, welche unterhalb der Hyperbel der Maximalleistung Pₘₐₓ liegt oder diese in einem Punkt berührt.

Während die Ausführungen nach FIG 4 und FIG 5 die Maximalleistung jeweils nur in einem Punkt ausnutzen, zeigt FIG 6 eine nahezu ideale Lösung, welche unterhalb des vorgegebenen Maximalstromes immer mit Maximalleistung arbeitet. Der Strom wird wie in den beiden ersten Ausführungen über einen Messwiderstand Rₘ gemessen und hier mittels eines Operationsverstärkers N_{I} auf den Wert Iₘₐₓ begrenzt. Ein Multiplizierer MUL ermittelt aus Strom und Spannung am Transistor T_{L} die augenblickliche Verlustleistung, während ein weiterer Operationsverstärker N_{P} eine Regelung auf den vorgegebenen Referenzwert Pₘₐₓ durchführt. Die beiden Operationsverstärker sind derart miteinander verbunden, dass z. B. durch Open-Collector-Ausgänge die jeweils niedrigere Ausgangsspannung an der Steuerelektrode des Transistors T_{L} anliegt.

## Patentansprüche

1. Stromversorgung mit einem Gleichrichter (GLB) zur Gleichrichtung einer Eingangswechselspannung (U_{w}) und mit einem Speicherkondensator (C), der über ein von einer Ansteuerschaltung gesteuertes Strombegrenzungselement (SBG, T_{L}) von einer gleichgerichteten Eingangsspannung (Ug) aufladbar ist,
**dadurch gekennzeichnet,**
• **dass** die Stromversorgung einen Stromfühler (SI) zur Messung eines Längsstroms (i_{L}) und einen Spannungsfühler (SU) zur Messung einer Spannung (U_{L}) an dem Strombegrenzungselement (T_{L}) aufweist, wobei die Signale aus Strom- (SI) und Spannungsfühler (SU) derart miteinander verknüpft und in ein Ansteuersignal für das Strombegrenzungselement (T_{L}) gewandelt werden, dass das Strombegrenzungselement (T_{L}) mit nicht mehr als einer vorgebbaren maximalen Verlustleistung (Pₘₐₓ) belastet ist und
• **dass** das Strombegrenzungselement ein in Serie mit einem Messwiderstand (Rₘ) liegender Längstransistor (T_{L}) ist, der von zwei Regelverstärkern (Np, N_{I}) angesteuert ist, wobei einem Regelverstärker (Np) einerseits ein der maximalen Verlustleistung (Pₘₐₓ) entsprechender Referenzwert und andererseits der Ausgang eines Multiplizierers (MUL), welcher den gemessenen Längsstrom (i_{L}) mit der Spannung (U_{L}) an dem Längstransistor multipliziert, und dem anderen Regelverstärker (N_{I}) ein dem maximalen Strom (iₘₐₓ) entsprechender Referenzwert sowie der gemessene Längsstrom zugeführt ist.

2. Stromversorgung nach Anspruch 1,
**dadurch gekennzeichnet, dass** die Ansteuerschaltung (AST, K, Tᵥ) dazu eingerichtet ist, bei Erreichen einer der maximalen Verlustleistung entsprechenden Grenzspannung (U_{gr}) den Strom über das Strombegrenzungselement (T_{L}) abzuschalten.

3. Stromversorgung nach Anspruch 1,
**dadurch gekennzeichnet, dass** die Ansteuerschaltung (Tᵥ; MUL, N_{P}, N_{I}) dazu eingerichtet ist, den Strom über das Begrenzungselement (T_{L}) längs einer im wesentlichen unterhalb der Hyperbel der maximalen Verlustleistung im I/U-Kennlinienfeld verlaufenden Geraden abzuregeln.

4. Stromversorgung nach Anspruch 1,
**dadurch gekennzeichnet, dass** die Ansteuerschaltung dazu eingerichtet ist, über das Begrenzungselement (T_{L}) den Strom (i_{L}) im wesentlichen längs einer der maximalen Verlustleistung (Pₘₐₓ) entsprechenden Hyperbel zu regeln.

5. Stromversorgung nach Anspruch 2,
**dadurch gekennzeichnet, dass** das Strombegrenzungselement ein in Serie mit einem Messwiderstand (Rₘ) liegender Längstransistor (T_{L}) ist, dessen Steuerelektrode einerseits über einen weiteren Transistor (Tᵥ) und andererseits über ein durch Vergleich der Spannung an dem Längstransistor mit der Grenzspannung (U_{gr}) gewonnenes Komparatorsignal angesteuert ist.

6. Stromversorgung nach Anspruch 4,
**dadurch gekennzeichnet, dass** das Strombegrenzungselement ein in Serie mit einem Messwiderstand (Rₘ) liegender Längstransistor (T_{L}) ist, der von einem Transistor (T_{V}) angesteuert ist, dessen Eingangskreis einerseits dem Spannungsabfall an dem Messwiderstand proportionales und andererseits ein der Spannung (U_{L}) an dem Längstransistor (T_{L}) proportionales Signal zugeführt ist.

## Claims

1. Power supply having a rectifier (GLB) for rectifying an input AC voltage (U_{w}) and having an energy-storage capacitor (C) which can be charged from the rectified input voltage (Ug) via a current limiting element (SBG, T_{L}) which is controlled by a drive circuit,
**characterized**
• **in that** the power supply has a current sensor (SI) for measurement of a series current (i_{L}), and a voltage sensor (SU) for measurement of a voltage (U_{L}) across the current limiting element (T_{L}), with the signals from the current sensor (SI) and from the voltage sensor (SU) being linked to one another and converted to a drive signal for the current limiting element (T_{L}) in such a way that the current limiting element (T_{L}) is loaded with no more than a predeterminable maximum power loss (Pₘₐₓ), and
• **in that** the current limiting element is a series transistor (T_{L}) which is connected in series with a measurement resistor (Rₘ) and is driven by two control amplifiers (N_{P}, N_{I}), with one control amplifier (N_{P}) being supplied on the one hand with a reference value which corresponds to the maximum power loss (Pₘₐₓ) and, on the other hand, with the output of a multiplier (MUL) which multiplies the measured series current (i_{L}) with the voltage (U_{L}) across the series transistor, and the other control amplifier (N_{I}) being supplied with a reference value, which corresponds to the maximum current (iₘₐₓ), as well as the measured series current.

2. Power supply according to Claim 1,
**characterized in that** the drive circuit (AST, K, Tᵥ) is set up to switch off the current via the current limiting element (T_{L}) on reaching a limit voltage (U_{gr}) which corresponds to the maximum power loss.

3. Power supply according to Claim 1,
**characterized in that** the drive circuit (T_{V}; MUL, N_{P}, N_{I}) is set up to regulate the current via the limiting element (T_{L}) along a straight line which runs essentially below the hyperbola of the maximum power loss in the I/U family of characteristics.

4. Power supply according to Claim 1,
**characterized in that** the drive circuit is set up to regulate the current (i_{L}) via the limiting element (T_{L}) essentially along a hyperbola which corresponds to the maximum power loss (Pₘₐₓ).

5. Power supply according to Claim 2,
**characterized in that** the current limiting element is a series transistor (T_{L}) connected in series with a measurement resistor (Rₘ), the control electrode of which series transistor is driven firstly via a further transistor (T_{V}) and secondly via a comparator signal which is obtained by comparison of the voltage across the series transistor with the limit voltage (U_{gr}).

6. Power supply according to Claim 4,
**characterized in that** the current limiting element is a series transistor (T_{L}) connected in series with a measurement resistor (Rₘ) and driven by a transistor (T_{V}) whose input circuit is supplied firstly with a signal which is proportional to the voltage drop across the measurement resistor and secondly with a signal which is proportional to the voltage (U_{L}) across the series transistor (T_{L}).

## Revendications

1. Alimentation en courant comportant un redresseur (GLB) pour le redressement d'une tension alternative d'entrée (U_{W}) et un condensateur de stockage (C) qui peut être chargé par une tension d'entrée redressée (Ug) par l'intermédiaire d'un élément limiteur de courant (SBG, T_{L}) commandé par un circuit de commande,
**caractérisée par le fait que**
• l'alimentation en courant comporte un détecteur de courant (SI) pour la mesure d'un courant longitudinal (i_{L}) et un détecteur de tension (SU) pour la mesure d'une tension (U_{L}) à l'élément limiteur de courant (T_{L}), les signaux issus des détecteurs de courant (SI) et de tension (SU) étant combinés entre eux et transformés en un signal de commande pour l'élément limiteur de courant (T_{L}) de telle sorte que l'élément limiteur de courant (T_{L}) n'est pas soumis à une charge supérieure à une puissance dissipée maximale pouvant être prescrite (Pₘₐₓ), et
• l'élément limiteur de courant est un transistor longitudinal (T_{L}) qui est monté en série avec une résistance de mesure (Rₘ) et qui est commandé par deux amplificateurs de régulation (N_{P}, N_{I}), un amplificateur de régulation (N_{P}) recevant d'une part une valeur de référence correspondant à la puissance dissipée maximale (Pₘₐₓ) et d'autre part la sortie d'un multiplieur (MUL) qui multiplie le courant longitudinal mesuré (i_{L}) par la tension (U_{L}) au transistor longitudinal et l'autre amplificateur de régulation (N_{I}) recevant une valeur de référence correspondant au courant maximal (iₘₐₓ) ainsi que le courant longitudinal mesuré.

2. Alimentation en courant selon la revendication 1,
**caractérisée par le fait que** le circuit de commande (AST, K, T_{V}) est conçu pour couper le courant par l'intermédiaire de l'élément limiteur de courant (T_{L}) lorsqu'une tension limite (U_{gr}) correspondant à la puissance dissipée maximale est atteinte.

3. Alimentation en courant selon la revendication 1,
**caractérisée par le fait que** le circuit de commande (T_{V} ; MUL, N_{P}, N_{I}) est conçu pour réguler le courant par l'intermédiaire de l'élément limiteur (T_{L}) le long d'une droite s'étendant globalement en dessous de l'hyperbole de la puissance dissipée maximale dans la famille de caractéristiques I/U.

4. Alimentation en courant selon la revendication 1,
**caractérisée par le fait que** le circuit de commande est conçu pour réguler le courant (i_{L}) par l'intermédiaire de l'élément limiteur (T_{L}) globalement le long d'une hyperbole correspondant à la puissance dissipée maximale (Pₘₐₓ).

5. Alimentation en courant selon la revendication 2,
**caractérisée par le fait que** l'élément limiteur de courant est un transistor longitudinal (T_{L}) qui est monté en série avec une résistance de mesure (Rₘ) et dont l'électrode de commande est commandée d'une part par l'intermédiaire d'un autre transistor (T_{V}) et d'autre part par l'intermédiaire d'un signal de comparateur obtenu en comparant la tension au transistor longitudinal à la tension limite (U_{gr}).

6. Alimentation en courant selon la revendication 4,
**caractérisée par le fait que** l'élément limiteur de courant est un transistor longitudinal (T_{L}) qui est monté en série avec une résistance de mesure (Rₘ) et qui est commandé par un transistor (Tᵥ) dont le circuit d'entrée reçoit d'une part un signal proportionnel à la chute de tension à la résistance de mesure et d'autre part un signal proportionnel à la tension (U_{L}) au transistor longitudinal (T_{L}).
